# EUROPEAN PATENT APPLICATION

(11) **EP 3 579 171 A1**
(43) Date of publication of application: **11.12.2019**
(21) Application number: 18748043.9
(22) Date of filing: 29.01.2018
(51) Int. Cl.: G06Q 30/06, G07F 7/02

(54) **MERCHANDISE PRESENTATION SYSTEM AND MERCHANDISE PRESENTATION METHOD**

(30) Priority: 31.01.2017 JP 2017015591
(71) Applicant: JR East Water Business Co., Ltd, Tokyo 1410032 (JP)
(72) Inventor: IIJIMA Shunsuke, Tokyo 150-0022 (JP); KAWAGUCHI Fumihiko, Tokyo 150-0022 (JP); KOIDE Tomomi, Tokyo 150-0022 (JP); OMORO Rui, Tokyo 150-0022 (JP); HORIGUCHI Yuuki, Tokyo 150-0022 (JP)
(74) Representative: Rösler Rasch van der Heide & Partner
(86) International application number: PCT/JP2018/002601
(87) International publication number: WO 2018/143107

(57) **Abstract**

The gift giver's terminal 20 includes a product purchasing application provided with a function to execute the transfer of the receiving authority from the gift giver's terminal 20 to the gift receiver's portable terminal 30 installed thereon and thus is configured to transmit a receiving authority transfer request to the management server 10 via the product purchasing application. The management server 10 is configured to transfer the receiving authority requested to transfer by the gift giver's terminal 20 only to the gift receiver's portable terminal 30 in which the product purchasing application is installed.

## Description

### Technical field

The present invention relates to a product presentation system and a product presentation method in which a gift receiver can receive a product purchased by a gift giver at a vending machine.

### Background art

In the related art, a system described in Patent Literature 1 is known as a product presentation system in which a gift receiver can receive a product purchased by a gift giver at a vending machine. The product presentation system of Patent Literature 1 is configured such that an authentication file is attached to an electronic mail transmitted from an administrator server to a portable terminal of the gift receiver in response to a request from the gift giver to transmits the authentication file to the portable terminal of the gift receiver, then the product is supplied to the gift receiver from the vending machine by transmitting the authentication file to the vending machine via communication means such as infrared communication or wireless communication provided in the gift receiver's portable terminal. According to such a product presentation system, it is possible to receive a presentation at the timing of the gift receiver.

### Citation List

### Patent Literature

Patent Literature 1: JP 2002-74048 A

### Summary of Invention

### Technical Problem

Here, in order to stably continue the product presentation service using the product presentation system of this type, it is necessary to increase the number of users of the product presentation service. However, in the product presentation system of Patent Literature 1, only a single presentation from a gift giver to a gift receiver is assumed, and no effort is made to increase the number of users of the product presentation service.

In view of the above-described problems, it is an object of the present invention is to provide a product presentation system and a product presentation method capable of increasing the number of users of the product presentation service.

### Solution to Problem

The product presentation system according to the present invention is a product presentation system capable of transferring a receiving authority to receive a product from a vending machine from a gift giver to a gift receiver, including: a gift giver's terminal owned by the gift giver; a gift receiver's portable terminal owned by the gift receiver; a management server that manages a transfer of the receiving authority from the gift giver's terminal to the gift receiver's portable terminal; and a vending machine configured to deliver a product by exercise of the receiving authority, in which the gift giver's terminal includes a product purchasing application provided with a function to execute the transfer of the receiving authority from the gift giver's terminal to the gift receiver's portable terminal installed thereon and thus is configured to transmit a receiving authority transfer request to the management server via the product purchasing application, and the management server is configured to transfer the receiving authority requested to transfer by the gift giver's terminal only when the product purchasing application is installed on the gift receiver's portable terminal, and execute an installation prompting process to prompt installation of the product purchasing application to the gift receiver's portable terminal when the product purchasing application is not installed on the gift receiver's portable terminal.

In the product presentation system according to the present invention, it is preferable that the product purchasing application installed on the gift receiver's portable terminal is configured to be capable of displaying code information for exercising the receiving authority transferred from the gift giver's terminal on a display screen of the gift receiver's portable terminal, and the vending machine is provided with a code reading unit capable of reading the code information displayed on the display screen of the gift receiver's portable terminal and configured to deliver the product by reading the code information by the code reading unit.

Also, in the product presentation system according to the present invention, it is preferable that the management server is configured to issue a present URL for the gift receiver's portable terminal to proceed a transfer procedure for the receiving authority upon reception of the receiving authority transfer request from the gift giver's terminal.

A product presentation method according to the present invention uses a management server that manages a receiving authority to receive a product from a vending machine and transfers the receiving authority from a gift giver's terminal owned by a gift giver to a gift receiver's portable terminal owned by a gift receiver, including: a step of transmitting a receiving authority transfer request to the management server from the gift giver's terminal in which a product purchasing application provided with a function to execute the transfer of the receiving authority is installed to the management server via the product purchasing application; a step of determining whether or not the product purchasing application is installed on the gift receiver's portable terminal; and a step of executing an installation prompting process that prompts installation of the product purchasing application on the gift receiver's portable terminal when the product purchasing application is determined not installed on the gift receiver's portable terminal, in which the receiving authority requested to transfer by the gift giver's terminal is transferred to the gift receiver's portable terminal only when the product purchasing application is installed on the gift receiver's portable terminal.

In the product presentation method according to the present invention, it is preferable that the product purchasing application installed on the gift receiver's portable terminal is configured to be capable of displaying code information for exercising the receiving authority transferred from the gift giver's terminal on a display screen of the gift receiver's portable terminal, and the vending machine is provided with a code reading unit capable of reading the code information displayed on the display screen of the gift receiver's portable terminal and configured to deliver the product by reading the code information by the code reading unit.

Also, in the product presentation method according to the present invention, it is preferable that the management server is configured to issue a present URL for the gift receiver's portable terminal to proceed a transfer procedure for the receiving authority upon reception of the receiving authority transfer request from the gift giver's terminal.

### Advantageous Effects of Invention

According to the present invention, a product presentation system and a product presentation method capable of increasing the number of users of the product presentation service are provided.

### Brief Description of Drawings

Fig. 1 is a diagram illustrating an outline of a system configuration of a product presentation system according to the present embodiment.
Fig. 2 is a block diagram illustrating a schematic configuration of a management server.
Fig. 3 is a block diagram illustrating a schematic configuration of a vending machine.
Fig. 4 is a diagram schematically illustrating an example of a screen displayed on a user terminal by a function of a product purchasing application.
Fig. 5 is a view illustrating an example of a message transmitted to a gift receiver at the time of gift presentation.
Fig. 6 is a flowchart illustrating a flow of a product purchase step.
Fig. 7 is a flowchart illustrating the flow of a presentation step.
Fig. 8 is a flowchart illustrating a flow of a product receiving step.

### Description of Embodiments

Hereinafter, preferred embodiments for carrying out the present invention will be described with reference to the drawings. Note that the following embodiments are not intended to limit the invention according to each claim, and all combinations of features described in the embodiments are not necessarily essential to the solution means of the invention.

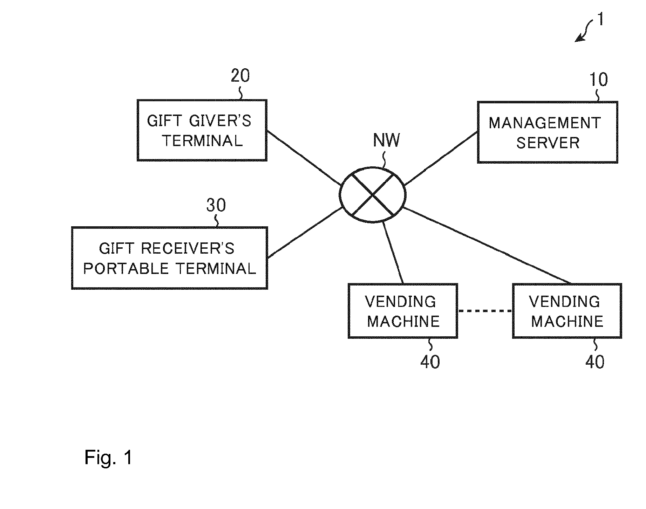

As illustrated in Fig. 1, a product presentation system 1 according to the present embodiment includes, for example, a plurality of vending machines 40 for stocking products such as containerized beverages, and a management server 10 managed by a manager of the vending machines 40, a gift giver's terminal 20 owned by a gift giver of the product, and a gift receiver's terminal 30 owned by a gift receiver of the product. The management server 10 is connected to the gift giver's terminal 20, the gift receiver's terminal 30, and the vending machine 40 so as to be capable of establishing data communication via a communication line NW such as the Internet.

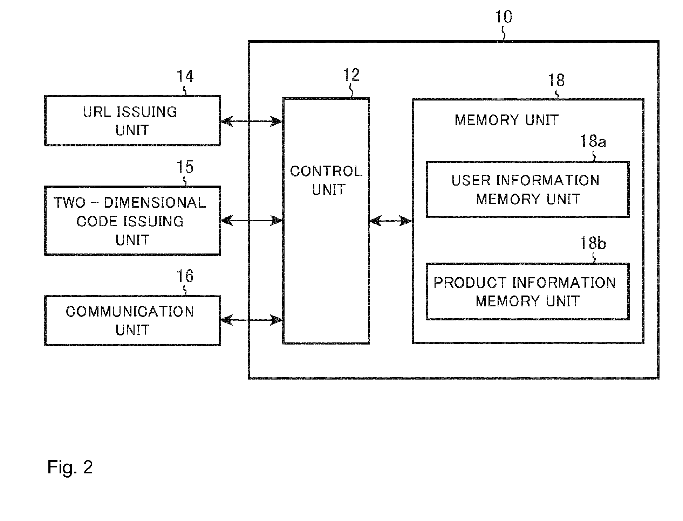

The management server 10 is a so-called web server, and as illustrated in Fig. 2, is provided with a control unit 12 configured to execute various controls of the management server 10; a URL issuing unit 14 configured to issue a present URL for the gift receiver's portable terminal 30 to proceed a transfer procedure of the receiving authority; a two-dimensional code issuing unit 15 configured to issue matrix-type two-dimensional code (code information) for receiving the product from the vending machines 40; a communication unit 16 configured to perform data communication with the gift giver's terminal 20, the gift receiver's terminal 30, the vending machines 40 and other external systems via a communication line NW; and a memory unit 18 in which various data files and various programs are stored.

The control unit 12 is configured to exercise various functions provided by the management server 10 by a CPU executing various processing programs stored in the memory unit 18. As the control unit 12 described above, it is various known control means such as a personal computer capable of executing various controls based on the program stored in the memory unit 18 may be employed, and thus detailed description of the control unit 12 will be given.

The URL issuing unit 14 is configured to issue a presentation URL for the gift receiver's portable terminal 30 that has received a message indicating the reception of the present to proceed a transfer procedure for the receiving authority of the product. The connection destination page (web) of the present URL is configured to cause a web browser of the gift receiver's portable terminal 30 to determine whether or not the product purchasing application is installed on the gift receiver's portable terminal 30 to which a connection request to the present URL is sent, and if the product purchasing application is not installed on the gift receiver's portable terminal 30, cause the web browser to execute a process of transferring to an install target URL from which the product purchasing application can be installed. Also, the connection destination page of the presentation URL is configured to cause the web browser of the gift receiver's portable terminal 30 to execute a process of activating the product purchasing application when the product purchasing application is installed on the gift receiver's portable terminal 30.

The two-dimensional code issuing unit 15 is configured to generate a matrix-type two-dimensional code that can be read by a two-dimensional code reading unit 43 described later of the vending machine 40 and that can receive the product from the vending machine 40. This matrix-type two-dimensional code includes information necessary for receiving the product from the vending machine 40, for example, information such as a user ID of the gift receiver, and information for identifying whether the payment is prepayment (prepaid via the product purchasing application) or post-payment (post-payment by a credit card registered in advance or the like). Note that in the description of the present embodiment, although the matrix-type two-dimensional code includes information on the user ID of the gift receiver. However, the present invention is not limited thereto and may be identification information issued temporarily in association with the user ID of the gift receiver. Further, in the description of the present embodiment, a matrix-type two-dimensional code is described as an example. However, the present invention is not limited thereto, and a one-dimensional code (so-called bar code) may also be used. Generation of the matrix-type two-dimensional code by the two-dimensional code issuing unit 15 can be performed by various known methods, so the detailed description thereof is omitted.

The communication unit 16 is configured to function as an interface for performing data communication with the gift giver's terminal 20, the gift receiver's terminal 30, and the vending machine 40, and includes various communication devices. Further, the communication unit 16 is configured to perform data communication with an external payment system or the like according to the payment type based on the product purchase information received from the purchasing terminal (for example, the gift giver's terminal 20) that purchases the product via the product purchasing application, and transmit the determination result of payment availability acquired from the external payment system or the like to the purchasing terminal. Since such a communication unit 16 can employ various known communication means, the detailed description thereof is omitted.

The memory unit 18 includes various memory means including a program storage area for storing a program to be executed by the control unit 12 and the like, and a data file storage area for storing various data files necessary for execution of the program. The data file storage area includes a user information memory unit 18a in which user information related to each user (a user including a gift giver and a gift receiver) who is registered as a member in the product presentation service of the product presentation system 1 is stored; and a product information memory unit 18b in which product information on products that can be purchased by the user is stored. Further, in the data file storage area of the memory unit 18, information (installation point information and the like) regarding each vending machine 40 is also stored. Here, the product information means information on the product such as the name and price of the product. Further, user information refers to user IDs assigned to each user, and information related to purchased products of the user stored in association with the user ID and the number of stocked products (number of stocks).

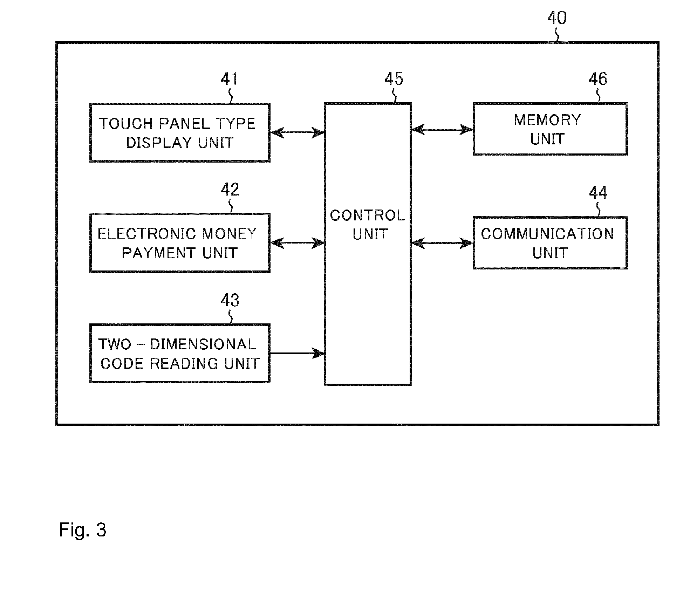

The vending machine 40 is a vending machine that automatically sells a product stocked inside, and includes: as illustrated in Fig. 3, a touch panel type display unit 41 capable of displaying various information such as an image of a product and a price, for example, an electronic money payment unit 42 configured to perform payment process using an electronic money medium such as an IC card with a built-in IC chip, a portable terminal, and the like; a two-dimensional code reading unit 43 configured to read a matrix-type two-dimensional code displayed on a display screen such as a portable terminal; a communication unit 44 configured to perform data communication with the management server 10 via the communication line NW; a control unit 45 configured to execute various controls of the vending machine 40; and a memory unit 46 in which various data files and various programs are stored. The vending machine 40 further includes a human sensor (not illustrated) capable of detecting the presence of a human within a predetermined detection range.

The touch panel type display unit 41 is configured to be capable of displaying a list of products stocked inside, and to be capable of receiving selection of products and the like by a user's touch operation. As such a touch panel type display unit 41 can employ various known touch panel displays, the detailed description thereof will be omitted.

The electronic money payment unit 42 is configured to be capable of wirelessly communicating with an electronic money medium such as an IC card with a built-in IC chip or a portable terminal, for example, and is configured to be capable of executing reading the electronic money information stored in the electronic money medium, and rewriting the electronic money information (processing of subtracting the product purchase money from the charge amount). Since it is possible to employ various known electronic money payment means as such an electronic money payment unit 42, and therefore the detailed description thereof is omitted.

The two-dimensional code reading unit 43 is configured to read various information embedded in the matrix-type two-dimensional code, for example, information such as the user ID of the gift receiver and a payment method (information for determining whether it is prepayment or post-payment) by reading the matrix-type two-dimensional code displayed on the display screen of the portable terminal or the like and analyzing the matrix-type two-dimensional code. Note that the analysis of the matrix-type two-dimensional code in the two-dimensional code reading unit 43 can be performed by various known methods, and thus the detailed description thereof is omitted.

The communication unit 44 is configured to function as an interface for performing data communication with the management server 10, and includes, for example, various communication devices such as a router and an antenna. Since such a communication unit 44 can employ various known communication means, the detailed description thereof is omitted.

The control unit 45 is configured to exercise various functions, described later, provided by the vending machines 40 by a CPU executing various processing programs stored in the memory unit 46. As the control unit 45 described above, it is various known control means such as a personal computer capable of executing various controls based on the program stored in the memory unit 46 may be employed, and thus detailed description of the control unit 12 will be given.

The memory unit 46 includes various memory means including a program storage area for storing a program to be executed by the control unit 45 and the like, and a data file storage area for storing various data files necessary for execution of the program. The data file storage area stores information on names of products stocked inside the vending machine 40, prices, stock numbers, and the like, and information such as various messages displayed on the touch panel type display unit 41.

In the vending machine 40 according to the present embodiment is configured to provide (discharge) the product to the user when confirmation of the receiving authority via the two-dimensional code reading unit 43 is completed, or when electronic money payment via the electronic money payment unit 42 is completed. Specifically, when the matrix-type two-dimensional code displayed on the display screen of the user's portable terminal or the like is faced to the two-dimensional code reading unit 43, the vending machine 40 reads the user ID and payment method information from the matrix-type two-dimensional code. Then, if the read payment method information is prepaid information, the read user ID is used to acquire the information of the purchased product owned by the user from the management server 10, and a screen of a list of products displayed on the touch panel type display unit 41 is updated so that the purchased product is displayed in a mode (for example, highlight display) different from other products (not purchased products). On the other hand, when the read payment method information is post-payment information, a list of products to be stocked inside is displayed by the normal method. Then, the product selected by the user is provided to the user. In addition, the vending machine 40 is configured to accept the selection of the product from the user via the touch panel type display unit 41, and when the electronic money payment via the electronic money payment unit 42 is completed, to provide the product selected by the user to the user.

The gift giver's terminal 20 is a portable communication terminal such as a smart phone or a tablet terminal, and has a product purchasing application installed with a series of functions, described later, regarding a series of functions relating to procedures of purchase and presentation of the product. The gift giver's terminal 20 is configured to execute product purchasing process, product presentation process to the gift receiver, and data communication with the management server 10, and the like by the function of the product purchasing application. Note that the gift giver's terminal 20 has a product purchasing application installed, and may be a notebook personal computer, or may be an installation type terminal such as a desktop personal computer as long as it can execute the product purchasing process, the product presentation process to a gift receiver, the data communication with the management server 10, and the like by the function of the product purchasing application.

The product purchasing application is configured to exercise various functions related to product purchase and presentation procedures and the like based on various information appropriately acquired from the management server 10.

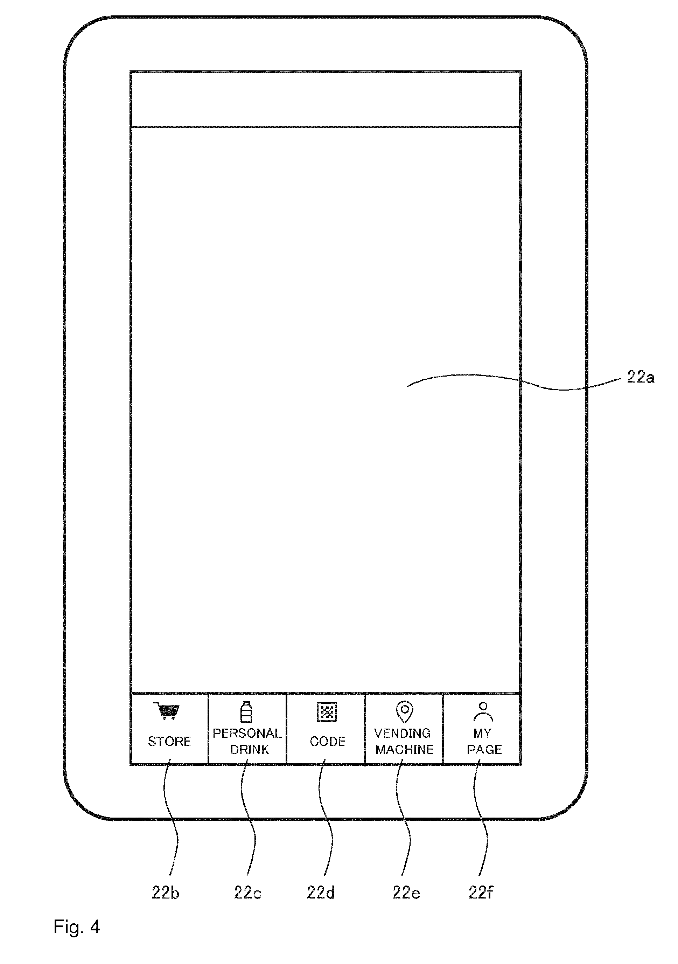

Specifically, as illustrated in Fig. 4, the product purchasing application is configured to display a screen having an information display area 22a for displaying various information, a store display tab 22b for displaying a purchase page (not illustrated) for purchasing a product in the information display area 22a, a personal drink display tab 22c for displaying a purchased product list page (not illustrated) on which already purchased products are listed in the information display area 22a, a code display tab 22d for displaying a matrix-type two-dimensional code (not illustrated) in the information display area 22a, a vending machine display tab 22e for displaying the installation location of the vending machine 40 in the information display area 22a, and a My Page display tab 22f for displaying a My Page (not illustrated) in the information display area 22a on the user terminals (the gift giver's terminal 20 and the gift receiver's portable terminal 30, and the like).

The product purchasing application is configured to acquire product information on a product that can be purchased by the user from the management server 10 when the store display tab 22b is selected (tap, press), and display a purchase page for purchasing the product in the information display area 22a on the user terminals (the gift giver's terminal 20, the gift receiver's portable terminal 30, and the like) based on this information. The purchase page includes a list of products that can be purchased by the user, and when a product is selected from the list, is configured to proceed to a purchase type selection screen, a purchase quantity selection screen, and a payment type selection screen. Here, the purchase type selection screen is a screen for selecting one-time purchase, regular purchase, and the like, and the purchase quantity selection screen is a screen for selecting the number of products to be purchased, and the payment type selection screen is a screen for selecting a payment method of the purchase money (such as electronic money and credit card payment). Note that about the payment method selected in the payment type selection screen, if registration of detailed information (for example, information registration of a credit card and the like) is not completed, the screen proceeds to a screen for registering detailed information. When the purchase procedure via the purchase page is completed, the user information (purchased products of the user and the number of stored products thereof) stored in the memory unit 18 of the management server 10 is updated, and the information of the purchased products is added to the purchased product list page.

The product purchasing application is configured to acquire user information on each user from the management server 10 when the personal drink display tab 22c is selected, generate a purchased product list page based on this information, and display this My Page in the information display area 22a of the user terminal. The purchased products list page incudes a list of purchased products, and includes a display area in which a sample image of the products, expiration date information, and the number of held products are displayed, a product name display section with a link for proceeding to a screen on which the product name is displayed and detailed information of the product is posted, and a presentation process execution selection button for executing the product presentation process (not illustrated). Note that when the presentation process described later is executed and the user information (purchased products of the user and the quantity in stock) stored in the memory unit 18 of the management server 10 is updated, the purchased products list page and a presentation product list page are updated correspondingly. Specifically, a product out of stock is deleted from the purchased product list page, and for a product having one or more of stocks, the number of stock is reduced by the number of presented products. In addition, the information of the product for which the presentation is made is added to the presentation product list page.

The product purchasing application is configured to transmit a request for issuance of a presentation URL (receiving authority transfer request) to the management server 10 when the presentation processing execution selection button of the purchased product list page is selected, and acquire the presentation URL issued by the URL issuing unit 14 or the management server 10.

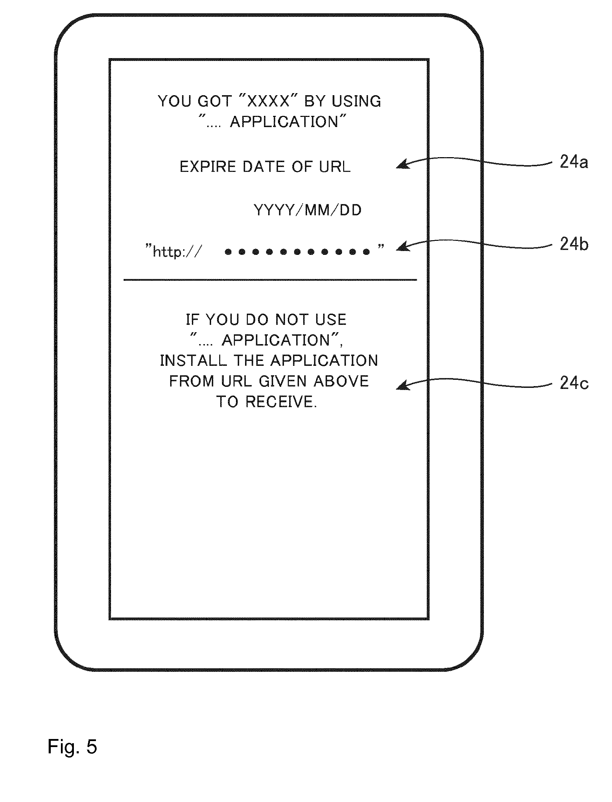

Further, the product purchasing application is configured to generate a message for the gift receiver based on the presentation URL acquired from the management server 10 and the template message. This message includes, as illustrated in Fig. 5, a bibliographic matters display area 24a displaying the fact that the product has been presented by the gift giver, the expiration date of the presentation URL, and so on, the presentation URL are displayed, a URL display section 24b displaying a URL with a link to proceeding to a presentation URL, and an installation prompt display area 24c for prompting a message instructing to open the presentation URL again after the product purchasing application is installed. Note that the message to a gift-gift receiver is not limited to the example of illustration, and can be configured to have various structures.

Furthermore, the product purchasing application is configured to receive from the user a selection of transmission means for transmitting the generated message and a selection of a destination (a gift receiver), and transmit a message to the selected gift receiver by the selected transmission means. Note that examples of the transmission means of a message include arbitrary means, such as an electronic mail, the message transmission/reception function of social networking service (SNS) and the like may be employable.

In addition, the product purchasing application is configured to display a selection button (not illustrated) for selecting whether to receive a purchased product (prepaid product) from the vending machine 40 or to receive a product from the vending machine 40 by post-payment when the code display tab 22d is selected and output a generation request of a matrix-type two-dimensional code to the management server 10 when prepayment or post-payment is selected by the selection button. Further, the product purchasing application is configured to display the matrix-type two-dimensional code generated in the management server 10 in the information display area 22a of the user terminal.

Furthermore, the product purchasing application is configured to acquire information (installation point information) about the vending machine 40 from the management server 10 when the vending machine display tab 22e is selected, and based on this information, display a page for displaying various information such as a location of installation of the vending machine 40 and the like on the information display area 22a of the user terminal. In addition, the product purchasing application is configured to acquire user information on each user from the management server 10 when the My Page display tab 22f is selected, and to display the My Page based on the information. In this My Page is configured, for example, to be capable of checking various information such as possessed points and the like, information on subscribed products for regular purchase, history information on presentation products which have already presented, history information on purchased products, products to be refunded and the like as well as performing various settings regarding member services, cooperation with the SNS and the like, and information on registration of a credit card.

The gift receiver's terminal 30 is a portable communication terminal such as a smart phone or a tablet terminal, and is configured to be capable of installing the above-described product purchasing application. Note that it should be noted that the gift receiver's terminal 30 needs to have the product purchasing application installed in order to exercise the receiving authority for the vending machine 40 for receiving the right to receive, but the product purchasing application does not have to be installed at the stage where the gift giver's terminal 20 is selected as a gift object. Details will be described in the presentation step described later.

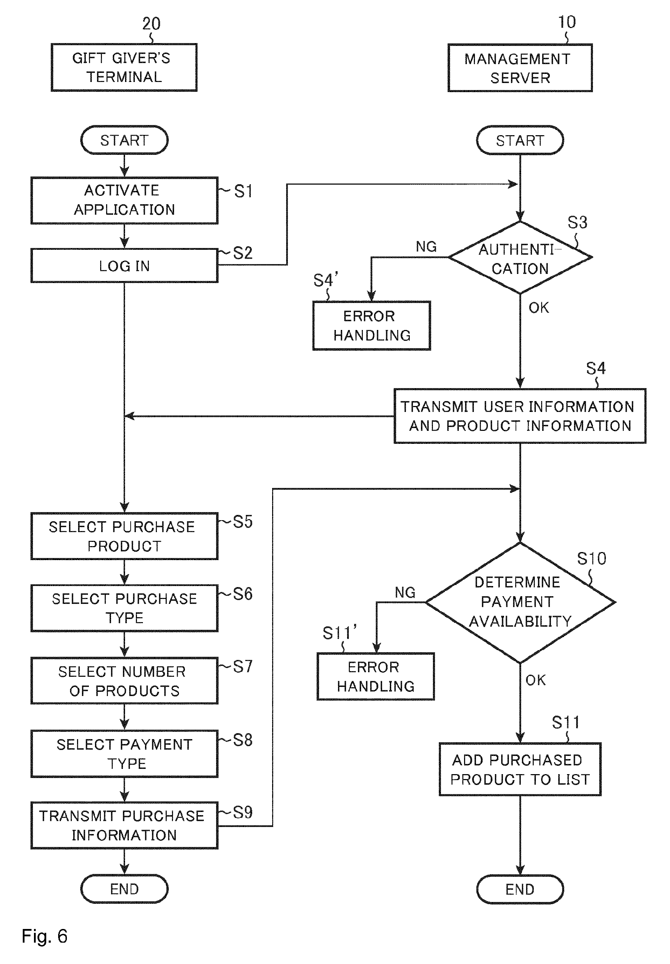

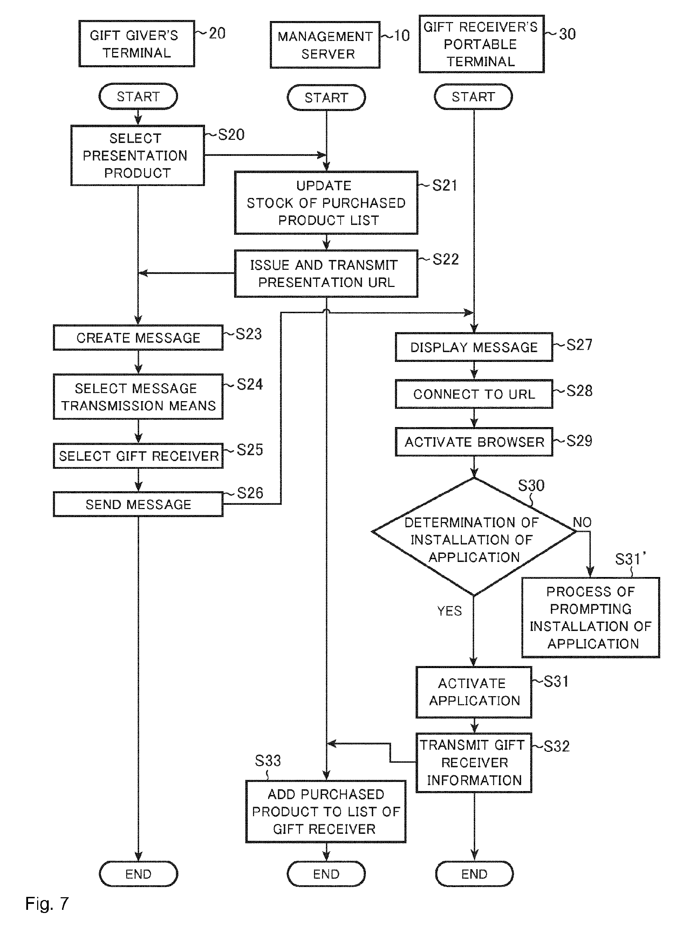

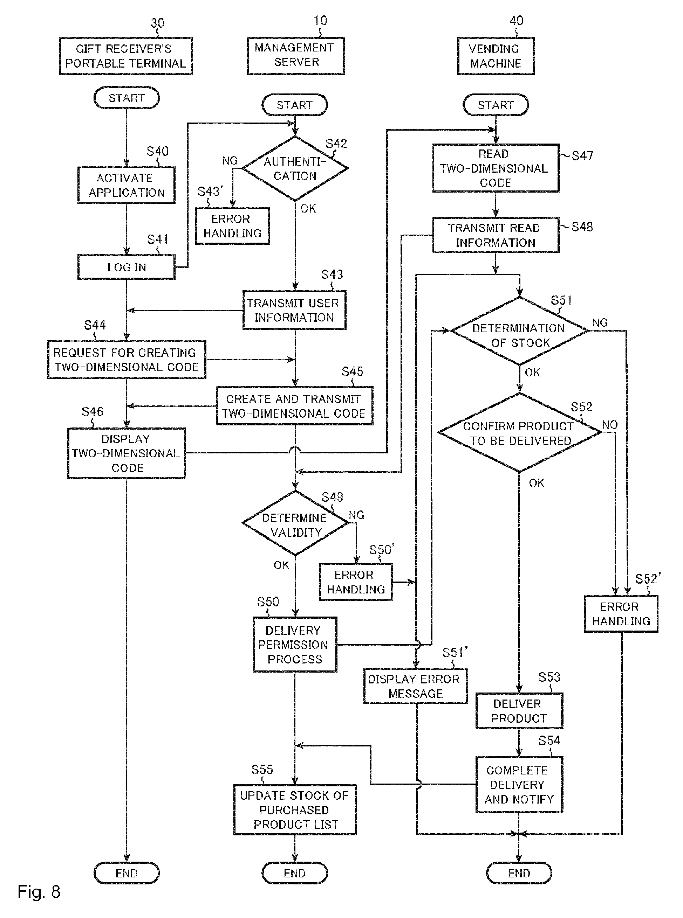

Next, a product presentation method using the product presentation system 1 according to the present embodiment will be described with reference to Fig. 6 to Fig. 8. In the product presentation method according to the present embodiment, the product purchase step (see Fig. 6) executed when the gift giver purchases the product, the presentation step to be executed when the receiving authority of the product is transferred from the gift giver to the gift receiver (see Fig. 7), and the product receiving step (see Fig. 8) to be executed when the gift receiver receives product from the vending machine 40.

### [Product Purchase Step]

First, the product purchase step to be performed when a gift giver purchases a product will be described with reference to Fig. 6. When the gift giver purchases a product, the gift giver activates a product purchasing application stored in the gift giver's terminal 20 owned by the gift giver (S1). After the activation of the product purchasing application, a login operation is performed via the gift giver's terminal 20 (S2), and authentication is performed in the management server 10 by various known methods (S3). When an error occurs in this authentication, various error handling such as sending an error message from the management server 10 to the gift giver's terminal 20 to prompt a login operation again is executed (S4'). On the other hand, if the authentication is successful, the product information and the user information of the gift giver stored in the management server 10 are transmitted to the gift giver's terminal 20 (S4). Note that the login operation and the authentication process described above may be omitted for the activation from the second and subsequent activations.

As a result, the gift giver's terminal 20 becomes capable of displaying various pages such as the purchase page described above in the information display area 22a of the display screen by the function of the product purchasing application based on the product information and the user information of the gift giver received from the management server 10. Then, the gift giver's terminal 20 accepts a selection of the purchase product via the purchase page, a selection of the purchase type via the purchase type selection screen, a selection of the purchase quantity via the purchase quantity selection screen, and a selection of payment types via the payment type selection screen is received by the operation of the gift giver (S5 to S8), and transmits the received information to the management server 10 as product purchase information (S9).

Based on the product purchase information received from the gift giver's terminal 20, the management server 10 transmits a confirmation request as to whether payment is possible to an external payment system or the like corresponding to the payment type. When the answer from the external payment system or the like indicates that payment is not possible, various error handling such as sending an error message from the management server 10 to the gift giver's terminal 20 to prompt reselection or registration of the payment type and the like are performed (S10, S11'). On the other hand, when an answer from an external payment system or the like can be settled, processing of adding the purchased product to the purchased product list is executed (S10, S11). According to the above-described steps, the addition of the product to the list of already-purchased products of the gift giver makes it possible to present the product from the gift giver to the gift receiver (specifically, transfer of the receiving authority of the product).

### [Presentation Step]

Next, a presentation step performed when the receiving authority of a product from the gift giver to the gift receiver will be described using Fig. 7. Note that the presentation step is executed in a state where the login is performed by the same steps as S1 to S4 of the product purchase step. The gift giver selects the personal drink display tab 22c to display the purchased product list page in the information display area 22a of the gift giver's terminal 20, and selects a desired product to present from the purchased products listed in the purchased product list page, and then selects the product presentation process execution selection button. When the gift giver's terminal 20 accepts the selection of the presentation processing execution selection button by the gift giver, the gift giver's terminal 20 specifies the product corresponding to the presentation processing execution selection button as the presentation target product, and transmits the product information of the presentation target product to the management server 10 (S20) .

The management server 10 executes a process of updating the stock information of the purchased product list stored in the memory unit 18 based on the product information of the product to be presented received from the gift giver's terminal 20 (S21), issues a presentation URL by the URL issuing unit 14, and transmits it to the gift giver's terminal 20 (S22).

The gift giver's terminal 20 generates a message (see Fig. 5) including the presentation URL based on the presentation URL acquired from the management server 10 and the template message (S23). Further, the gift giver's terminal 20 displays the transmission means selection screen on the display screen, and accepts the selection of the message transmission means by the operation of the gift giver via the transmission means selection screen (S24). Further, the display screen of the gift giver's terminal 20 proceeds to a gift receiver selection screen, and the selection of the destination (the gift receiver) of the product is accepted by the operation of the gift giver via the gift receiver selection screen (S25). Then, the gift giver's terminal 20 transmits a message including the presentation URL to the selected gift receiver's portable terminal 30 of the selected gift receiver via the selected message transmission means (S26).

The gift receiver's portable terminal 30 displays the message on the display screen by the operation of the gift receiver upon reception of a message from the gift giver's terminal 20 (S27) (see Fig. 5). Then, when the presentation URL in the message is selected by the operation of the gift receiver (S28), the gift receiver's portable terminal 30 activates the web browser and connects to the presentation URL (S29).

The activated web browser determines whether the product purchasing application is installed on the gift receiver's portable terminal 30 (S30). Then, if it is determined in this determination that the product purchasing application is not installed, application installation prompting process such as transferring to an installation destination URL where the product purchasing application can be installed installable URL (application market etc.) is executed (S31)'). On the other hand, when it is determined that the product purchasing application is installed, the product purchasing application is activated (S31), and an appropriate indication notifying that the product is properly presented on the display screen of the gift receiver's portable terminal 30 (not illustrated). In addition, the gift receiver's portable terminal 30 transmits gift reception information to the management server 10 (S32).

Then, the management server 10 executes a process of adding the presented product to the purchased product list of the gift receiver stored in the memory unit 18 based on the gift reception information received from the gift receiver's portable terminal 30 (S33). As a result, the presentation of the product from the gift giver to the gift receiver (specifically, the transfer of the receiving authority of the product) is completed, and the gift receiver can receive the product from the vending machine 40. Further, the management server 10 appropriately notifies the gift giver's terminal 20 that the presentation of the product has been completed (not illustrated).

### [Product Receiving Step]

Next, a product receiving step performed when the gift receiver receives a product from the vending machine 40 will be described with reference to Fig. 8. First, in the same steps as S1 to S4 of the product purchase step, activation of the product purchasing application (S40) and login process (S41) are executed in the gift receiver's portable terminal 30, the authentication process is executed in the management server 10 (S42), and after the completion of the authentication, user information of the gift receiver is transmitted from the management server 10 to the gift receiver's portable terminal 30 (S43). Note that the login operation and the authentication process described above may be omitted for the activation from the second and subsequent activations.

When the code display tab 22d is selected, the gift receiver's portable terminal 30 displays a selection button for selecting prepayment or post-payment in the information display area 22a, and when prepayment or post-payment is selected by the selection button, the gift receiver's portable terminal 30 outputs a generation request of the matrix-type two-dimensional code to the management server 10 (S44). When the management server 10 receives the generation request of the matrix-type two-dimensional code from the gift receiver's portable terminal 30, the management server 10 generates a matrix-type two-dimensional code for receiving product and transmits it to the gift receiver's portable terminal 30 (S45). As a result, a matrix-type two-dimensional code for receiving product is displayed in the information display area 22a of the gift receiver's portable terminal 30 (S46).

The gift receiver arbitrarily selects the vending machine 40 to receive the product, and display the matrix-type two-dimensional code displayed on a display screen of the gift receiver's portable terminal 30 in the two-dimensional code reading unit 43 of the vending machines 40. The vending machine 40 reads the matrix-type two-dimensional code displayed on the display screen of the gift receiver's portable terminal 30, and analyzes the read matrix-type two-dimensional code (S47). Then, if the information on the payment method included in the matrix-type two-dimensional code is prepaid information, the vending machine 40 transmits the read user ID to the management server 10 (S48). On the other hand, when the payment method information included in the matrix-type two-dimensional code is post-payment information, the vending machine 40 displays a list of products to be stocked inside by a normal method, provides the product selected by the user to the user, transmits the purchase information to the management server 10, and completes the product receiving process (not illustrated).

Based on the user ID received from the vending machine 40, the management server 10 executes confirmation of the purchased product held by the gift receiver and the expiration date thereof, and the validity of the receiving authority of the product (whether or not the product can be received) is determined (S49). Then, when an error occurs in the validity determination, various error handling such as transmitting error information to the vending machine 40 from the management server 10 (S50'), and displaying an error message in the touch panel type display unit 41 of the vending machine 40 are executed (S51'). On the other hand, when it is determined that the receiving authority of the product is valid in this validity determination, the management server 10 issues delivery permission of the product including information on the purchased product owned by the gift receiver to the vending machine 40 (S50).

When the vending machine 40 receives the delivery permission of the product from the management server 10, the vending machine 40 takes stock information of the product stored in the memory unit 46 into consideration and determines whether delivery of the purchased product owned by the gift receiver is possible (S51). Note that the purchased product determined to be deliverable in this determination is displayed on the touch panel type display unit 41 (S52), and when the gift receiver selects to receive the purchased product, the purchased product is delivered to the gift receiver (S53). On the other hand, if delivery of the purchased product is not possible (in the case of "NG" in S51), or if the gift receiver wishes to receive a product other than the purchased product (in the case of "No" in S52), various error handling such as displaying an error message on the touch panel type display unit 41 of the vending machine 40 are executed (S52'), the product receiving process is ended.

Then, when the delivery of the product to the gift receiver is completed, as illustrated in Fig. 8, the vending machine 40 transmits a notification of completion of delivery including the information of the product delivered to the gift receiver to the management server 10 (S54), and an administrator server 10 transmits a notification of completion of delivery to the gift giver's terminal 20. In addition, the management server 10 executes a process of updating the stock information of the purchased product list of the gift receiver stored in the memory unit 18 based on the information of the delivered product received from the vending machine 40 (S55). Note that it is also possible, for example, to terminate a transaction when the human sensor detects that the gift receiver has left a predetermined range of the vending machines 40 without completing the operation before the delivery of the product to the gift receiver (before the product is discharged from the vending machine 40).

According to the above-described steps, presentation of a product from the gift giver to the gift receiver via a given vending machines 40 is achieved. Note that in the embodiment described above, the present invention has been described by way of example in which the gift receiver who has obtained the receiving authority the product receives the product from the vending machine 40. However, according to the product presentation system 1 of the present embodiment, it is also possible to receive the product purchased via the product purchasing application by the vending machine 40 by the user.

As described above, the product presentation system 1 according to the present embodiment is a product presentation system 1 capable of transferring the receiving authority to receive the product from the vending machine 40 from the gift giver to the gift receiver, including: the gift giver's terminal 20 owned by the gift giver, the gift receiver's portable terminal 30 owned by the gift receiver, the management server 10 for managing the transfer of the receiving authority from the gift giver's terminal 20 to the gift receiver's portable terminal 30, and the vending machine 40 configured to deliver the product by exercising the receiving authority, the gift giver's terminal 20 includes a product purchasing application provided with a function to execute the transfer of the receiving authority from the gift giver's terminal 20 to the gift receiver's portable terminal 30 installed thereon and thus is configured to transmit a receiving authority transfer request to the management server 10 via the product purchasing application, the management server 10 is configured to transfer the receiving authority requested to transfer by the gift giver's terminal 20 only to the gift receiver's portable terminal 30 in which the product purchasing application is installed, and when the product purchasing application is not installed on the gift receiver's portable terminal 30, an installation prompting process for prompting installation of the product purchasing application to the gift receiver's portable terminal 30.

According to the product presentation system 1 having such a configuration, it is configured to perform transfer of the receiving authority of the product via the product purchasing application and to prompt the installation to the gift receiver's portable terminal 30 on which the product purchasing application is not installed. Therefore, installation of the product purchasing application not only on the gift giver's terminal 20 of the gift giver but also on the gift receiver's portable terminal 30 of the gift receiver is enabled. Further, as a result, such a cycle that a product is presented by the gift giver's terminal 20 on which the product purchasing application is installed, the product purchasing application is also installed in the gift receiver's portable terminal 30 of the gift receiver who has received the product, and the gift receiver presents a product to another gift receiver as the gift giver is established. This cycle makes it possible to increase the number of users in the product presentation service using the product presentation system 1.

Although the preferred embodiment of the present invention has been described thus far, the technical scope of the present invention is not limited to the scope described in the above-described embodiment. It is possible to add various change or improvement to each above-described embodiment.

In the above-described embodiment, the matrix-type two-dimensional code includes only information such as user ID and information identifying whether the payment is the prepayment or the post-payment, and an arbitrary product which can be received by the vending machine 40 is selected. However, the invention is not limited thereto, and a mode in which the matrix-type two-dimensional code includes product information on the product to be received, and the product to be received is received via the vending machines 40 (that is, the product to be received is temporarily fixed) is also applicable.

For example, in the embodiment described above, an example has been described in which the product is received from the vending machine 40 by causing the vending machine 40 to read the matrix-type two-dimensional code displayed on the display screen of the gift receiver's portable terminal 30. However, the present invention is not limited thereto. For example, such mode is also applicable that the ID information of an electronic money medium (an IC card with a built-in IC chip, a portable terminal and the like) is stored in the memory unit 18 of the management server 10 in association with the purchased product, the vending machines 40 reads the ID information from the electronic money medium and sends it to the management server 10, the purchased product (the receivable product) is identified from the ID information in the management server 10, the information on the product is transmitted to the vending machines 40, and a list of receivable products is displayed to accept a selection by the vending machines 40.

Although the embodiment described above exemplifies a mode in which one gift giver presents the receiving authority of the product to one gift receiver, the present invention is not limited thereto. For example, a mode of group sharing, that is, a mode in which one gift giver presents a receiving authority of a product to a plurality of gift receivers is also applicable.

In the embodiment described above, although it has been described that the product receiving process is terminated when delivery of the purchased product is not possible or when the gift receiver wishes to receive a product other than the purchased product, the present invention is limited thereto. Alternatively, for example, an alternative product having a price equal to or less than the price of the purchased product may be delivered. Specifically, for example, the vending machine 40 may be configured to be capable of delivering a substitute product whose price is equal to or less than the price of the purchased product, and the management server 10 may be configured to be capable of executing the processing to return the difference between the purchased product and the substitute product to the gift giver. As processing to return this difference, for example, various methods such as return by points, return by appropriation to purchase money of other product, return by cash voucher and return by bank transfer of the difference and the like may be adopted arbitrarily. It is possible.

In the embodiment described above, it has been described that the determination of payment availability at the time of product purchase is executed in an external payment system or the like, but is not limited thereto. If the determination is possible by the management server 10, the determination of whether or not payment may be performed may be performed by the management server 10.

In the embodiment described above, it has been described that the installation judgment of the product purchasing application is executed via the web browser of the gift receiver's portable terminal 30, but the present invention is not limited thereto. For example, various configurations are applicable such that selection of the presentation URL connects a wave page managed by the management server 10, and in this wave page, the install judgement is performed.

It is apparent from the description of the claims that the above-described modifications fall within the scope of the present invention.

### Reference Signs List

- 1: product presentation system
- 10: management server
- 20: gift giver's terminal
- 30: gift receiver's portable terminal
- 40: vending machine
- NW: communication line

## Claims

1. A product presentation system capable of transferring a receiving authority of a product from a vending machine from a gift giver to a gift receiver, comprising:
a gift giver's terminal owned by the gift giver;
a gift receiver's portable terminal owned by the gift receiver;
a management server that manages a transfer of the receiving authority from the gift giver's terminal to the gift receiver's portable terminal; and
a vending machine configured to deliver a product by exercise of the receiving authority,
the gift giver's terminal including a product purchasing application provided with a function to execute the transfer of the receiving authority from the gift giver's terminal to the gift receiver's portable terminal installed thereon and being configured to transmit a receiving authority transfer request to the management server via the product purchasing application,
the management server being configured to transfer the receiving authority requested to transfer by the gift giver's terminal to the gift receiver's portable terminal only when the product purchasing application is installed on the gift receiver's portable terminal,
the management server executing an installation prompting process to prompt installation of the product purchasing application to the gift receiver's portable terminal when the product purchasing application is not installed on the gift receiver's portable terminal.

2. The product presentation system according to claim 1, wherein the product purchasing application installed on the gift receiver's portable terminal is configured to be capable of displaying code information for exercising the receiving authority transferred from the gift giver's terminal on a display screen of the gift receiver's portable terminal, and
the vending machine includes a code reading unit capable of reading the code information displayed on the display screen of the gift receiver's portable terminal and is configured to deliver the product by reading the code information by the code reading unit.

3. The product presentation system according to claim 1 or 2, wherein the management server is configured to issue a present URL for the gift receiver's portable terminal to proceed a transfer procedure for the receiving authority upon reception of the receiving authority transfer request from the gift giver's terminal.

4. A product presentation method using a management server that manages a receiving authority to receive a product from a vending machine and transferring the receiving authority from a gift giver's terminal owned by a gift giver to a gift receiver's portable terminal owned by a gift receiver, the method comprising:
a step of transmitting a receiving authority transfer request to the management server from the gift giver's terminal in which a product purchasing application provided with a function to execute the transfer of the receiving authority is installed to the management server via the product purchasing application;
a step of determining whether or not the product purchasing application is installed on the gift receiver's portable terminal; and
a step of executing an installation prompting process that prompts installation of the product purchasing application on the gift receiver's portable terminal when the product purchasing application is determined not installed on the gift receiver's portable terminal,
the receiving authority requested to transfer by the gift giver's terminal being transferred to the gift receiver's portable terminal only when the product purchasing application is installed on the gift receiver's portable terminal.

5. The product presentation method according to claim 4, wherein the product purchasing application installed on the gift receiver's portable terminal is configured to be capable of displaying code information for exercising the receiving authority transferred from the gift giver's terminal on a display screen of the gift receiver's portable terminal, and
the vending machine includes a code reading unit capable of reading the code information displayed on the display screen of the gift receiver's portable terminal and is configured to deliver the product by reading the code information by the code reading unit.

6. The product presentation method according to claim 4 or 5, wherein the management server is configured to issue a present URL for the gift receiver's portable terminal to proceed a transfer procedure for the receiving authority upon reception of the receiving authority transfer request from the gift giver's terminal.
